# EUROPEAN PATENT APPLICATION

(11) **EP 4 357 224 A1**
(43) Date of publication of application: **24.04.2024**
(21) Application number: 22202475.4
(22) Date of filing: 19.10.2022
(51) Int. Cl.: B62D 21/15, B62D 25/08, B62D 29/00

(54) **VEHICLE BODY STRUCTURE**

(71) Applicant: Volvo Car Corporation, 405 31 Göteborg (SE)
(72) Inventor: FERMÉR, Mikael, 40531 Göteborg (SE); SANDAHL, Anders, 40531 Göteborg (SE); CARLSSON, Anders, 40531 Göteborg (SE)
(74) Representative: Maiwald GmbH

(57) **Abstract**

The present disclosure relates to a vehicle body structure, a vehicle comprising such vehicle body structure and a method for manufacturing such vehicle body structure.

The vehicle body structure comprises at least one unitary casting portion, a cabin portion and at least one shield element. The unitary casting portion comprises several components integrally formed during a casting process. The unitary casting portion is assembled with the cabin portion for absorbing overload energy during a crash. The at least one shield element is arranged at the unitary casting portion to avoid an invasion of one or more deteriorated components of the unitary casting portion in direction to the cavity portion caused by the crash.

## Description

### TECHNICAL FIELD

The present disclosure relates to a vehicle body structure, a vehicle comprising such vehicle body structure and a method for manufacturing such vehicle body structure.

### BACKGROUND ART

Conventional body structures are built up by hundreds of primarily stamped steel and/or aluminum parts that are joined together. Current energy absorbing system made from steel for the body structures provide a good structural integrity also at severe overload cases that, by far, exceed standard legal and rating load cases.

Recently, a unified casting is presented, which may be integrated in an energy absorbing system for a vehicle. The unified casting replaces welded steel sheets in load-bearing body structures with a very large aluminum part from a single casting (so called "mega casting"), which has several benefits related to manufacturing complexity, design flexibility, sustainability, etc. Mega castings can be designed to provide excellent crash performance. Cast aluminum is, however, more brittle than steel.

### SUMMARY

Hence, there may be a need to provide an improved vehicle body structure comprising mega castings, which increases safety of a vehicle.

The problem is at least partially solved or alleviated by the subject matter of the independent claims of the present disclosure, wherein further examples are incorporated in the dependent claims. It should be noted that the aspects of the disclosure described in the following apply to the vehicle body structure, the vehicle comprising such vehicle body structure and the method for manufacturing such vehicle body structure.

According to the present disclosure, a vehicle body structure is presented. The vehicle body structure comprises at least one unitary casting portion, a cabin portion and at least one shield element. The unitary casting portion comprises several components integrally formed during a casting process. The unitary casting portion is assembled with the cabin portion for absorbing overload energy during a crash. The at least one shield element is arranged at the unitary casting portion to avoid an invasion of one or more deteriorated components of the unitary casting portion in direction to the cavity portion caused by the crash.

The vehicle body structure according to the present disclosure enables a global structural integrity for a body structure comprising big-size castings, specifically mega castings, even after a major crack of the castings. The shield element positioned between the unitary casting portion and the cabin portion can act as a safeguard able to carry strong load, which may keep the casting portion in place even if it cracks into smaller pieces. Accordingly, an invasion of the deteriorated casting portion into the cabin portion even in overload cases can be avoided without losing structural integrity in a backup structure, which increases vehicle's safety.

The vehicle body structure may be a main frame structure or a backbone of a vehicle, at which all other components, for instance engine, mechanical and electrical systems, seats, doors, etc. are assembled. The vehicle body structure may be adapted to keep all components in place and carry their weight that are present in the car. The vehicle body structure may be divided into three parts - an engine compartment part, a passenger cabin part, and a trunk part. The engine compartment part may be a front part and the trunk part may be a rear part of the vehicle. Generally, the vehicle body structure comprises smaller castings manufactured only for a designated functional area such as spring towers, chassis etc. joined together by means of welding, riveting, bolting, adhesive bonding or the like.

In contrast, the mega casting, in other words the unitary casting portion, may be manufactured using a molten metal material forced into a high-pressure mould designed for a large scale casting and solidified during cooling. In other words, the several components, which are conventionally joined together after manufacturing of each of them, may be integrally combined during the casting process to form a single-piece casting portion.

Hence, the unitary casting portion may replace a traditional steel structure and thereby several functionalities (carrying wheel suspension, powertrain, exterior, etc.). The unitary casting portion may, thus, allows a significant reduction of small components, diverse design and production flexibility.

The cabin portion may be positioned substantially in a middle of the vehicle body structure. The cabin portion may be adapted to enable a driver to drive and passengers to ride. Accordingly, the cabin portion may need to be protected from any invasion of mechanical components of the vehicle, particularly in case of a crash. Thus, the unitary casting portion may be arranged directly at or close to the cabin portion to absorb excessive or overload energy, preferably in the longitudinal direction of the vehicle, during a crash. Such unitary casting portion may be arranged at the front part and/or the rear part of the vehicle body structure.

To ensure a reliable integrity of the unitary casting portion in not only legal and rating load situation but also severe energy overload situation, which may cause one or more deformations or fractures in the unitary casting portion, at least one shield element may be arranged. The shield element may be positioned between the unitary casting portion and the cabin portion to absorb such overload energy.

The shield element may comprise an elastic material, which may be tensile to keep the unitary casting portion substantially in place despite a severe deterioration or crack of the unitary casting portion due to the overload energy. In the severe energy overload situation, the shield element may be able to retain cracked components of the unitary casting portion by forming a safety cage through its tensile strength, the shield element may prevent the deteriorated components from invading towards the cabin portion. Accordingly, the shield element may be a final back-up structure, specifically if the unitary casting portion cracks into small pieces.

In an example, the unitary casting portion comprises a metal alloy material. The unitary casting portion may be adapted to reduce its weight compared to the conventional vehicle body structure comprising a steel material despite a large size casting of the unitary casting portion.

Preferably, the metal alloy material may comprise an aluminum and/or magnesium alloy. Optionally, the unitary casting portion may also comprise a reinforced plastic material. However, the material for the unitary casting portion is not limited to the said materials, the material may be selected, which can contribute to a weight reduction of the unitary casting with increasing strength, which may lead to an energy consumption reduction.

In an example, the unitary casting portion is positioned in front of the cabin portion relative to a forward driving direction of the vehicle. The unitary casting portion may be arranged in a crumple zone of the vehicle. The crumple zone or crash zone may be understood as an area comprising safety structures deforming during a crash, which may delay a change in velocity and absorb the collision energy by a controlled deformation. Such crumple zone may be thus arranged between a bumper and a windshield of the vehicle.

Particularly, the unitary casting portion may be arranged at the front part between the front bumper and the front windshield of the vehicle relative to the forward driving direction. For instance, the unitary casting portion may be positioned at a front floor part of the vehicle.

In an example, the shield element is connected to an A-pillar of the vehicle body structure. Accordingly, the shield element may be arranged between the unitary casting portion and the A-pillar, in other words front pillar. In case of a frontal crash, the shield element may be able to capture deteriorated or fractured components of the unitary casting portion to avoid their invasion towards the cabin portion, which may lead to a safety improvement of the vehicle in case of a crash.

In an example, the unitary casting portion is positioned at a rear floor portion of the vehicle body structure relative to the forward driving direction of the vehicle. Additionally or alternatively to the arrangement of the unitary casting portion at the front part of the vehicle, the unitary casting portion may be arranged at the rear part between the rear bumper and the rear windshield of the vehicle relative to the forward driving direction.

The shield element may be arranged between the unitary casting portion and a C-pillar or rear pillar of the vehicle. In case of a backside crash, the shield element may be able to capture deteriorated or fractured components of the unitary casting portion to avoid their invasion towards the cabin portion. Accordingly, safety of the vehicle may be improved in case of a crash.

In an example, a material of the shield element is selected to withstand a tensile stress at least 400 MPa. The shield element may comprise the material having a high tensile strength to reliably avoid the invasion of one or more deteriorated components of the unitary casting portion during a crash. In other words, the shield element may be intended to function primarily in tension. Preferably, the material of the shield element is selected to withstand a tensile stress between 400 MPa and 4000 MPa. However, the maximum tensile strength of the shield element may not be limited to 4000 MPa.

In an example, the material of the shield element is selected from a group comprising steel, aluminum, carbon fiber reinforced polymer (CFRP) and para-aramid synthetic fiber. The shield element may also comprise any combination of these materials. However, the material of the shield element is not limited to the said material, but a suitable material may be selected, which can be processed in different forms and withstand a high tensile stress.

In an example, the shield element is formed as a plate, a rib structure, a net, a membrane, a tailored mat or a fabric. The shield element may comprise various shapes to prevent the deteriorated or cracked components of the unitary casting portion from invading towards the cabin portion. The shield element may comprise a number of separate tension bands connected to each other to form a grid structure such as plate, rib structure, net, membrane, tailored mat, fabric, etc. The shield element may be as big as possible to cover substantially entire cross-section of the unitary casting portion facing the shield element.

In an example, the unitary casting portion comprises several shield elements. The vehicle body structure may comprise two or more unitary casting portions, which may be arranged at the same side, for instance front part or rear part of the vehicle, and/or different side of the vehicle. Thus, the vehicle body structure may also comprise several shield elements, each may be rigidly connected to the respective unitary casting portion for forming a reliable energy absorbing structure. The shield elements may be formed in the same or different shape.

According to the present disclosure, a vehicle is also presented. The vehicle comprises a vehicle body structure as described above. The vehicle comprising one or more unitary casting portion containing a light metal material may be improved by arranging one or more shield elements between the unitary casting portion and a cabin portion of the vehicle body structure. Accordingly, even a brittle property of the unitary casting portion, deteriorated and/or cracked components of the unitary casting portion may be captured by the shield elements avoiding their invasion in direction to a passenger cabin.

According to the present disclosure, a method for manufacturing a vehicle body structure is also presented. The method comprises
- providing an integrally formed several components into a unitary casting portion during a casting process,
- arranging at least one shield element at the unitary casting portion to avoid an invasion of one or more deteriorated components of the unitary casting portion in direction to a cabin portion caused by the crash, and
- assembling the unitary casting portion with the cabin portion of the vehicle body structure for absorbing overload energy during a crash.

In an example, the shield element is integrated into the unitary casting portion during a casting process. Accordingly, the shield element may form a single piece with the unitary casting portion, which may further increase the structural integrity of the unitary casting portion in the vehicle.

In an example, the shield element may be separately manufactured from the unitary casting portion and fixedly and rigidly arranged at the unitary casting portion.

In an example, the supporting element is mounted to the unitary casting portion by mechanical fastening means. The mechanical fastening means may comprise rivets, bolts, screws, brackets, clamps or the like.

In an example, the shield element is mounted to the unitary casting portion by welding.

In an example, the shield element is mounted to the unitary casting portion by an adhesive bonding. An adhesive material for the adhesive bonding may be selected to be compatible with both of a material of the shield element and a material of the unitary casting portion.

It should be noted that the above examples may be combined with each other irrespective of the aspect involved. Accordingly, the method may be combined with structural features and, likewise, the system may be combined with features described above with regard to the method.

These and other examples of the present disclosure will become apparent from and elucidated with reference to the embodiments described hereinafter.

### BRIEF DESCRIPTION OF DRAWINGS

Examples according to the present disclosure will be described in the following with reference to the following drawings.
- Fig. 1: shows schematically an example of a vehicle comprising a vehicle body structure according to the present disclosure.
- Fig. 2a: shows schematically an example of a vehicle body structure comprising a steel material before a crash.
- Fig. 2b: shows schematically an example of a vehicle body structure comprising a steel material after a crash.
- Fig. 3a: shows schematically an example of a vehicle body structure comprising an aluminum material before a crash.
- Fig. 3b: shows schematically an example of a vehicle body structure comprising an aluminum material after a crash.
- Fig. 4a: shows schematically an example of a vehicle body structure according to the present disclosure before a crash.
- Fig. 4b: shows schematically an example of a vehicle body structure according to the present disclosure after a crash.

### DESCRIPTION OF EXAMPLES

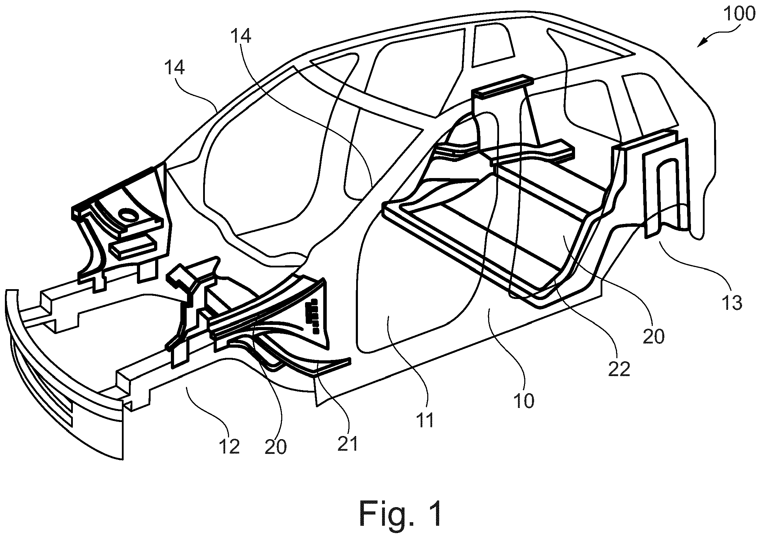

Fig. 1 shows a vehicle 100 comprising a vehicle body structure 10 comprising a unitary casting portion 20 acting as an energy absorbing system. The unitary casting portion 20 comprises a metal alloy material comprising aluminum or magnesium, which may be manufactured with very large aluminum parts from a single casting, in other words by a mega casting process. Such unitary casting portion 20 can be positioned at a front floor portion 21 and/or a rear floor portion 22 of the vehicle body structure 10.

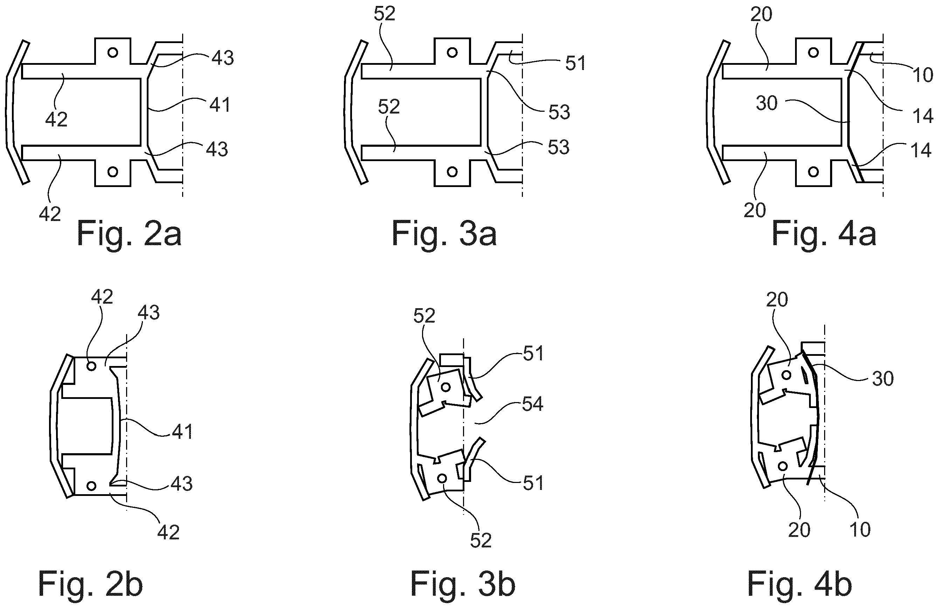

Fig. 2a and fig. 2b show a vehicle body structure 41 comprising a conventional steel material. The vehicle body structure 41 comprises an energy absorbing system 42 comprising several components containing the steel material, which can be individually manufactured, for instance by stamping, and fixedly assembled with each other. In fig. 2a and fig. 2b, the energy absorbing system 42 is mounted at an A-pillar portion 43 of the vehicle body structure 41.

As shown in fig. 2b, after a crash causing severe overload, a structural integrity of the energy absorbing system 42 within the vehicle body structure 41 is maintained despite a major invasion (> 300mm) of the energy absorbing system in direction to a cabin portion of the vehicle body structure 41.

Fig. 3a and fig. 3b show a vehicle body structure 51 comprises an energy absorbing system 52 containing an aluminum material, which may be manufactured by a mega casting process. In fig. 3a and fig. 3b, the energy absorbing system 52 is mounted at an A-pillar portion 53 of the vehicle body structure 51. In case of a crash, the cast aluminum material may be cracked and/or displaced, which may lead to a slight invasion (< 100mm) of the energy absorbing system 52 towards a cabin portion 54 of the vehicle body structure 51 (see fig. 3b).

Fig. 4a shows a vehicle body structure 10 according to the present disclosure before a crash. The vehicle body structure 10 comprises a casting portion 20, a cabin portion 11 and at least one shield element 30.

The unitary casting portion 20 comprises several components integrally formed during a casting process. The unitary casting portion 20 comprises a cast aluminum or magnesium alloy material. The unitary casting portion 20 is positioned at a front part 12 of the vehicle body structure 10 relative to a forward driving direction of the vehicle 100 and assembled with the cabin portion 11 for absorbing overload energy during a crash. Additionally or alternatively, the unitary casting portion 20 can be also positioned at a rear part 13 of the vehicle body structure 10 relative to a forward driving direction of the vehicle 100 (see also Fig. 1).

The shield element 30 is adapted to withstand a tensile stress at least 400 MPa and selected from a group comprising steel, aluminum, carbon fiber reinforced polymer (CFRP) and para-aramid synthetic fiber. The shield element 30 is formed as a plate, a rib structure, a net, a membrane, a tailored mat or a fabric to provide a safety structure.

The shield element 30 can be integrated into the unitary casting portion 20 during a casting process or separately manufactured from the unitary casting portion 20 and mounted to the unitary casting portion 20 by mechanical fastening means such as rivets, bolts, screws, brackets, clamps, etc., welding and/or adhesive bonding. As shown in fig. 4a, the shield element 30 is connected to an A-pillar portion 14 of the vehicle body structure 10 also by mechanical and/or chemical fastening means.

Fig. 4b shows that the shield element 30 arranged at the unitary casting portion 20 forms a tension net able to carry strong load after the crash. Accordingly, even in case of a crash, an invasion of one or more deteriorated components of the unitary casting portion 20 can be avoided without losing structural integrity, which increases vehicle's safety.

It has to be noted that examples of the disclosure are described with reference to different subject matters. In particular, some examples are described with reference to method type claims whereas other examples are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed examples. Other variations to the disclosed examples can be understood and effected by those skilled in the art in practicing a claimed disclosure, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A vehicle body structure (10), comprising
- at least one unitary casting portion (20),
- a cabin portion (11), and
- at least one shield element (30),
the unitary casting portion (20) comprising several components integrally formed during a casting process,
the unitary casting portion (20) being assembled with the cabin portion (11) for absorbing overload energy during a crash, and
the at least one shield element (30) being arranged at the unitary casting portion (20) to avoid an invasion of one or more deteriorated components of the unitary casting portion (20) in direction to the cabin portion (11) caused by the crash.

2. The vehicle body structure (10) according to claim 1, the unitary casting portion (20) comprising a metal alloy material.

3. The vehicle body structure (10) according to claim 1 or 2, the unitary casting portion (20) being positioned in front of the cabin portion (11) relative to a forward driving direction of the vehicle (100).

4. The vehicle body structure (10) according to the preceding claim, the shield element (30) being connected to an A-pillar portion (14) of the vehicle body structure (10).

5. The vehicle body structure (10) according to claim 1 or 2, the unitary casting portion (20) being positioned at a rear floor portion (22) of the vehicle body structure (10) relative to the relative to the forward driving direction of the vehicle (100).

6. The vehicle body structure (10) according to any of the preceding claims, a material of the shield element (30) being selected to withstand a tensile stress at least 400 MPa, preferably between 400 MPa and 4000 MPa.

7. The vehicle body structure (10) according to any of the preceding claims, the material of the shield element (30) being selected from a group comprising steel, aluminum, carbon fiber reinforced polymer (CFRP) and para-aramid synthetic fiber.

8. The vehicle body structure (10) according to any of the preceding claims, the shield element (30) being formed as a plate, a rib structure, a net, a membrane, a tailored mat or a fabric.

9. The vehicle body structure (10) according to any of the preceding claims, the unitary casting portion (20) comprising several shield elements (30).

10. A vehicle (100), the vehicle (100) comprising a vehicle body structure (10) according to any of the preceding claims.

11. A method for manufacturing a vehicle body structure (10), comprising
- providing an integrally formed several components into a unitary casting portion (20) during a casting process,
- arranging at least one shield element (30) at the unitary casting portion (20) to avoid an invasion of one or more deteriorated components of the unitary casting portion (20) in direction to a cabin portion (11) caused by a crash, and
- assembling the unitary casting portion (20) with the cabin portion (11) of the vehicle body structure (10) for absorbing overload energy during the crash.

12. The method according to claim 11, the shield element (30) being integrated into the unitary casting portion (20) during a casting process.

13. The method according to claim 11, the shield element (30) being mounted to the unitary casting portion (20) by mechanical fastening means.

14. The method according to claim 11, the shield element (30) being mounted to the unitary casting portion (20) by welding.

15. The method according to claim 11, the shield element (30) being mounted to the unitary casting portion (20) by adhesive bonding.

## Amended claims

### Amended claims in accordance with Rule 137(2) EPC.

1. A vehicle body structure (10), comprising
- at least one unitary casting portion (20),
- a cabin portion (11), and
- at least one shield element (30),
the unitary casting portion (20) being assembled with the cabin portion (11) for absorbing overload energy during a crash,
**characterized in that**
the unitary casting portion (20) comprising several components integrally formed during a casting process, and
the at least one shield element (30) being arranged at the unitary casting portion (20) to avoid an invasion of one or more deteriorated components of the unitary casting portion (20) in direction to the cabin portion (11) caused by the crash.

2. The vehicle body structure (10) according to claim 1, the unitary casting portion (20) comprising a metal alloy material.

3. The vehicle body structure (10) according to claim 1 or 2, the unitary casting portion (20) being positioned in front of the cabin portion (11) relative to a forward driving direction of the vehicle (100).

4. The vehicle body structure (10) according to the preceding claim, the shield element (30) being connected to an A-pillar portion (14) of the vehicle body structure (10).

5. The vehicle body structure (10) according to claim 1 or 2, the unitary casting portion (20) being positioned at a rear floor portion (22) of the vehicle body structure (10) relative to the relative to the forward driving direction of the vehicle (100).

6. The vehicle body structure (10) according to any of the preceding claims, a material of the shield element (30) being selected to withstand a tensile stress at least 400 MPa, preferably between 400 MPa and 4000 MPa.

7. The vehicle body structure (10) according to any of the preceding claims, the material of the shield element (30) being selected from a group comprising steel, aluminum, carbon fiber reinforced polymer (CFRP) and para-aramid synthetic fiber.

8. The vehicle body structure (10) according to any of the preceding claims, the shield element (30) being formed as a plate, a rib structure, a net, a membrane, a tailored mat or a fabric.

9. The vehicle body structure (10) according to any of the preceding claims, the unitary casting portion (20) comprising several shield elements (30).

10. A vehicle (100), the vehicle (100) comprising a vehicle body structure (10) according to any of the preceding claims.

11. A method for manufacturing a vehicle body structure (10), comprising
- providing an integrally formed several components into a unitary casting portion (20) during a casting process,
- arranging at least one shield element (30) at the unitary casting portion (20) to avoid an invasion of one or more deteriorated components of the unitary casting portion (20) in direction to a cabin portion (11) caused by a crash, and
- assembling the unitary casting portion (20) with the cabin portion (11) of the vehicle body structure (10) for absorbing overload energy during the crash.

12. The method according to claim 11, the shield element (30) being integrated into the unitary casting portion (20) during a casting process.

13. The method according to claim 11, the shield element (30) being mounted to the unitary casting portion (20) by mechanical fastening means.

14. The method according to claim 11, the shield element (30) being mounted to the unitary casting portion (20) by welding.

15. The method according to claim 11, the shield element (30) being mounted to the unitary casting portion (20) by adhesive bonding.
